# EUROPEAN PATENT SPECIFICATION

(11) **EP 2 851 303 B1**
(45) Date of publication and mention of the grant of the patent: **21.03.2018**
(21) Application number: 14184425.8
(22) Date of filing: 11.09.2014
(51) Int. Cl.: B65B 1/46, B65B 3/28, A61J 3/07, B65B 3/00

(54) **Method for weighing containers in a filling machine and related machine**
Verfahren zum Wiegen von Behältern in einer Befüllungsmaschine und zugehörige Maschine
Procédé pour peser des contenants dans une machine de remplissage et machine associée

(30) Priority: 12.09.2013 IT BO20130488
(43) Date of publication of application: 25.03.2015
(73) Proprietor: I.M.A. Industria Macchine Automatiche S.p.A., 40064 Ozzano dell'Emilia (BO) (IT)
(72) Inventor: Tarozzi, Giorgio, 41015 Nonantola (MO) (IT); Pasini, Enrico, 48018 Faenza (RA) (IT)
(74) Representative: Cicconetti, Andrea

(56) References cited:
- EP-A1- 0 376 711
- WO-A1-2007/003407
- US-A- 4 230 195

## Description

The present invention relates to methods for weighing containers in automatic packaging machines. Particularly, the invention relates to a method for weighing capsules or hard capsules or the like, which are filled with pharmaceutical products in an automatic filling machine.

In the filling processes of capsules with liquid, powdery, granular or tablet pharmaceutical products, the use is known of weighing apparatus or devices positioned downstream the filling station for measuring the weight of the dosed product.

The weight control is necessary for rejecting from the production the faulty containers (for example, because they contain an amount of product outside the tolerance range of the permissible dose) and/or for correcting any excesses or defects in dosing the product.

In the pharmaceutical field, it is very important to verify that the weight of the product dosed in the individual capsules is exactly the required one, with very narrow tolerance ranges.

Usually, only one weighing of the capsules is performed at the end of the dosing, since the weight of the empty capsules is known and included within a defined tolerance range, indicated and guaranteed by the suppliers/producers. In this way, from the measurement of the filled capsule weight (gross weight) by subtracting the known empty capsule weight (tare), it is possible to calculate the weight of the dispensed product (net weight) with a certain degree of precision.

In the filling processes in which the amount of product to be dosed in the capsules is very small, for example a few milligrams (the so-called "micro-dosing"), and the tolerance range required on the product dosage is limited, for example ± 10%, the normal weight variations of the empty capsules strongly affect and influence the weight measurement. In fact, since the variation of the empty capsules is comparable to the weight of the dispensed product, such weight variations can be larger than the tolerance range on the required dosage. In that case, a control only of the filled capsule weight is not sufficient to ensure that the amount of dosed product is within the required limits and it is necessary a prior weighing of the empty capsule and a calculation by difference of the dosed product weight.

Therefore, weighing methods and systems are known, which provide a first weighing station or scale, upstream of the filling station for measuring the empty capsules weight (tare), and a second weighing station or scale, downstream of the filling station, for measuring the filled capsules weight (gross weight). The difference between the two measured weights allows precisely calculating the net weight of the dosed product.

The weighing apparatus performing such kind of direct measurement comprise electronic scales including measuring cells or load cells on which the capsules have to be positioned for an appropriate time.

The weight control can be partial, of a statistical type, i.e. carried out on a sample of randomly selected filled capsules, or it can be a control of a total type, i.e. carried out on all the filled capsules in/by the filling machine (the so-called 100% weight control).

In order to carry out a precise and accurate weighing by using electronic scales it is necessary an appropriate measuring time. In particular, between the positioning of the capsule on the scale and the weight measurement a minimum time interval has to elapse, which is necessary to allow the stabilization of the scale, i.e. to allow damping the vibrations that are generated by placing the capsule on the same scale.

In the capsule filling machines it is possible to have an adequately long measurement time for high precision and accuracy of the measurement only by performing a statistical control of the capsule weight, i.e. a control performed on a limited sample thereof. However, for some typologies of pharmaceutical products a control of all the filled capsules is required.

In the filling machines with a total weight control it is possible to carry out a weighing of all the capsules, but with a precision and accuracy that are lower than those that can be achieved in the statistical weight control, since the time available for the weighing operation does not allow a complete stabilization of the scales. By using a time interval that is suitable for a more precise and accurate weighing, the machine productivity or speed would be in fact too low. Furthermore, in the event that the nominal operation speed of the machine would slow in some established time intervals to obtain more accurate and precise measurements, in the case of dosing powdery pharmaceutical products, the capsules filled with a machine running at a reduced speed would be different from those capsules filled with a machine operating at the nominal speed. In fact, it has been observed that the product doses, particularly powdery and granular products, obtained by the dosing means of the machine (with a dip dosing) depend on the operation speed of the machine and they noticeably differ when they are obtained at reduced speed or at nominal speed. Insertion of the dose into the capsule also depends on the speed with which it is carried out, i.e. on the machine speed. Therefore, it would be necessary to reject all the capsules that are filled at a reduced speed, the latter ones having a content of dosed product that is different from that of the capsules filled at the machine nominal speed. However, a large amount of rejections is not acceptable, especially in the case of expensive pharmaceutical products.

It has been verified that accuracy and precision in the weight measurement also depend on perturbations and disturbances of different kind, which act on the load cells of the electronic scales, such disturbances affecting the measurement even in a sensible manner. Perturbations comprise vibrations, accelerations generated by the mechanisms and moving parts of the machine, and disturbances caused by air flows, streams, and turbulence inside a working volume of the filling machine.

In the capsule filling machines, many operating stations are equipped with pneumatic means that are suitable to carry out operations on the capsules, in particular the opening of the capsules, the filling thereof with the product, the rejection of faulty capsules. Such pneumatic means generate pulsed or intermittent air streams and/or turbulences, which significantly affect the weight measurement. The pulsed air streams and/or turbulences generated by the pneumatic means cause greater disturbances inside a closed and confined environment, such as in a containment cabin with which the filling machines are often provided.

Filling machines are known, in which the capsules are taken from the filling line (moving turret), conveyed on scales positioned at a safe distance from the filling line, weighed, and then conveyed back and reinserted after the weighing operation in the filling line. In this manner, the weight measurement can be performed by avoiding or considerably decreasing disturbances and perturbations.

However, these machines require complex and expensive handling systems of the capsules in order to withdrawn, handle, and re-insert the capsules.

WO 2007/003407 discloses an apparatus and a corresponding method for weighing containers moved by conveying means, according to which weighing means and transferring means are suitable for transferring at least a container to be weighed from the conveying means to the weighing means and for transferring at least a weighed container from said weighing means to said conveying means; and second removing means suitable for transferring the weighed container to the conveying means.

An object of the present invention is to improve the known methods for weighing containers, such as capsules, hard capsules or the like, which are filled with a product, in particular for pharmaceutical use, in an automatic filling machine.

Another object is to provide a weighing method that allows, in a filling machine, carrying out both a statistical weight control with a higher accuracy and precision on samples of containers, and a total weight control on the remaining containers with a lower accuracy and precision.

A further object is to achieve a weighing method that allows measuring with an extremely high precision and accuracy the weight of the containers by eliminating or considerably reducing the disturbances and perturbations due to both vibrations, accelerations, stresses generated by mechanisms and moving parts of the machine and to air flows, streams and/or turbulences generated by the operating stations of the machine, without excessively compromising the machine productivity.

In a first aspect of the invention a weighing method according to claim 1 is provided.

In a second aspect of the invention, a machine for weighing and filling containers according to claim 12 is provided.

The invention will be better understood and implemented with reference to the attached figures, which illustrate some exemplary, non-limiting embodiments of the invention, in which:
- figure 1 is a schematic, top plan view of a filling machine for capsules which carry out the weighing method of the invention;
- figures 2a, 2b illustrate a diagram of an operation cycle of the machine of figure 1 according to the method of the invention;
- figure 3 is a schematic, top plan view of a variant of the filling machine for capsules, which carry out a variant of the weighing method of the invention;
- figures 4a, 4b illustrate a diagram of an operation cycle of the machine of figure 3 according to a variant of the method of the invention;
- figures 5a, 5b illustrate a diagram of an operation cycle of the machine of figure 3 according to another variant of the method of the invention;
- figures 6a, 6b illustrate a diagram of an operation cycle of the machine of figure 3 according to another further variant of the method of the invention.

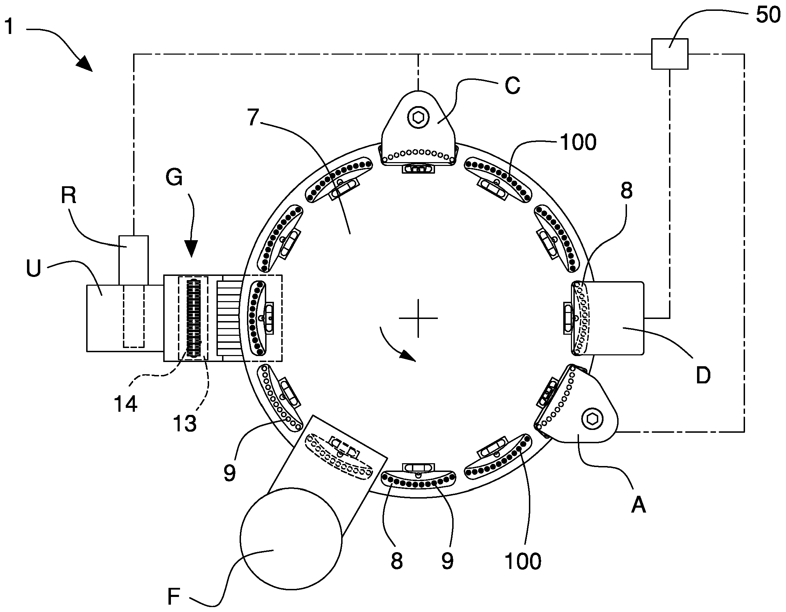

With reference to figure 1, a filling machine 1 according to the invention is schematically shown that is suitable to fill containers 100, for example capsules, hard capsules or similar elements made of hard gelatin, with a pharmaceutical product in a liquid, powdery form, in granules or in tablets.

The machine 1 comprises a feeding station F of the containers or capsules 100, a plurality of operating stations A, D, C, R for carrying out operations on the containers 100, weighing means G for weighing the containers 100, and moving means 7 provided with a plurality of supports 8, the so-called banks, which are provided with corresponding seats 9 for housing the containers 100 and arranged to move the latter ones sequentially through the operating stations A, D, C, R. The machine 1 also comprises a control and processing unit 50 that controls and coordinates the operation of the feeding station F, the operating stations A, D, C, R, the weighing means G.

In particular, the operating stations comprise an opening operating station A for opening the containers 100 (for example, capsules formed by a bottom and a lid), a dosing operating station D for carrying out product doses and for dosing the latter ones into the containers 100, a closing operating station C for closing the containers 100 after dosing the product, a rejecting operating station R for rejecting faulty containers 100, for example due to a weight outside the tolerance.

The opening station A, dosing station D, and rejecting station R can comprise pneumatic operating means for carrying out different respective operations on the capsules.

The moving means 7 comprise a moving turret rotatable about a vertical rotational axis X and provided with a plurality of supports 8 arranged angularly spaced apart along the perimeter or circumferential edge of the turret 7. Each support 8 is of an elongated shape and comprises a plurality of respective seats 9 which are arranged to receive the containers 100 to be moved through the operating stations.

In the feeding station F the containers 100 are inserted in the seats 9 of the supports.

The weighing means in the shown embodiment comprise first weighing means G arranged for weighing the containers 100 filled with the product. The first weighing means G comprise, for example, a first electronic scale 13 provided with a plurality of respective measuring cells 14 (load cells) capable of measuring the weight of all the containers 100 housed and taken from a support 8. Alternatively, the first weighing means G may comprise weighing systems of direct or indirect type, for example of a capacitive, microwave type, with LVDT, etc.

The containers 100 filled with the product are taken from the feeding turret 7 and conveyed in an exit duct U through the first weighing means G. The rejection operating station R is interposed between the first weighing means G and the exit duct U so as to reject the containers having a non-compliant weight.

The filling machine 1 operates with intermittent motion in advancement steps, said intermittent motion comprising a motion step and a stop step that are sequentially repeated. At each advancement step each support 8 rotates by a predetermined angle or angular pitch. The duration of the motion and stop steps is a function of the nominal speed or production rate of the filling machine.

During the normal operation, all the supports 8 are supplied and filled by the feeding station F with the containers 100 and then transferred sequentially to the opening working station A, in which the lids of the containers (capsules) are disengaged from the corresponding bottoms for the subsequent dosing of the product in the dosing operating station D.

In the following closing operating station C, the containers 100 are closed again, and then taken by the moving turret 7, transferred and weighed in the first weighing means G.

The weighing sequence of the containers 100 comprises a transfer step of the containers from the moving turret 7 to the load cells 14 of the first electronic scale 13, a weighing step, and a transfer step of the containers 100 from the load cells 14 to the exit duct U.

In the rejecting operating station R, downstream of the weighing means G, the faulty containers 100, for example because they are defective or because having a weight outside the tolerance, are not conveyed to the exit duct U, but forwarded to a rejection duct.

In other words, during the normal operation of the filling machine 1, there is provided:
- supplying the supports 8 with the containers 100 in the feeding station F,
- carrying out operations on the containers 100 by the operating stations A, D, R, and
- weighing the containers 100 by the weighing means G with a defined precision and accuracy.

To be noted that in the normal operation, the filling machine 1 carries out the weighing of all the containers 100 filled with the product, carrying out a total or so-called 100% weight control. However, since the weighing sequence is performed during the stop step of the intermittent motion, the weighing time available for the load cells 14 to detect the weight is small.

The method of the invention further provides to carry out during checking periods, that are selected randomly or according to defined criteria, a weight control of a sample S of containers 100 with accuracy and precision higher than the ones that are obtained in the total or 100% weight control. More precisely, the method provides:
- selecting during the normal operation of the filling machine 1 at least one checking period;
- stopping in defined inhibition time intervals T1, T2, T3 of the checking period the supply with the containers 100 in the feeding station F so as to leave empty established supports 8 of the moving means 7 intended to be positioned in at least one of the operating stations A, D, R in a weighing time interval Tp1 of said checking period during which a sample S of containers 100 taken from a respective established support of the moving means 7 is weighed on the weighing means G;
- decreasing, during the weighing time interval Tp1, a nominal operation speed of the filling machine 1 so as to increase a weighing time for weighing with a higher accuracy and precision the sample S of containers 100 in the weighing means G;
- inhibiting in the weighing time interval Tp1 the operation of at least one of the operating stations A, D, R in order not to perturb said weighing with vibrations and/or accelerations and/or air flows and/or air turbulences generated in the operation by said operating stations A, D, R.

In other words, it is possible, by decreasing the speed of the filling machine 1 in the weighing interval Tp1, to increase the weighing time for a predetermined sample of containers 100 that can be weighed with higher precision and accuracy. Precision and accuracy are further increased because, by inhibiting and stopping during this weighing time interval Tp1 the operation of the operating stations, it is possible to eliminate or greatly decrease perturbations and disturbances on the weight measurement.

Before said weighing time interval Tp1, there is provided to decelerate for at least one advancement step, for example two, the nominal speed of the machine up to a predefined reduced speed, for example equal to 50% of the nominal speed, and after said weighing time interval Tp1, there is provided to accelerate for at least one advancement step, for example two, the reduced speed up to the nominal speed. In the weighing time interval Tp1, there is provided to keep the reduced speed constant for at least one advancement step.

With the shown filling machine 1, the method provides to weigh in the weighing time interval Tp1 the sample S of containers 100 after the latter ones are filled with the product, in particular by the first weighing means G of the weighing means. In other words, there is provided to carry out a control of the gross weight of the containers 100, wherein the weight value of the dosed product can be calculated by knowing the weight of the empty containers (tare).

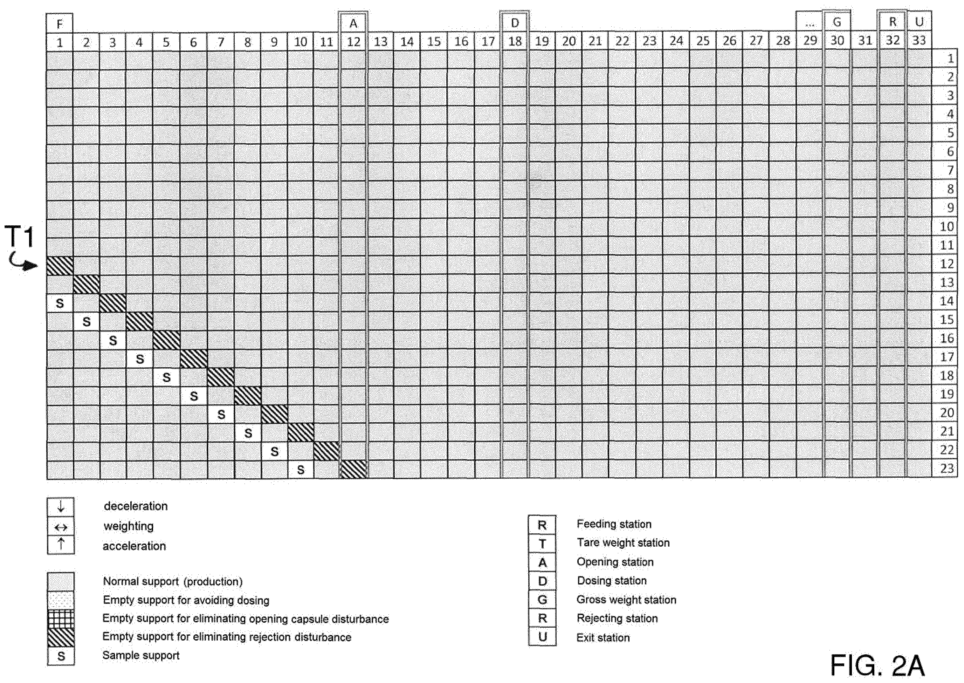

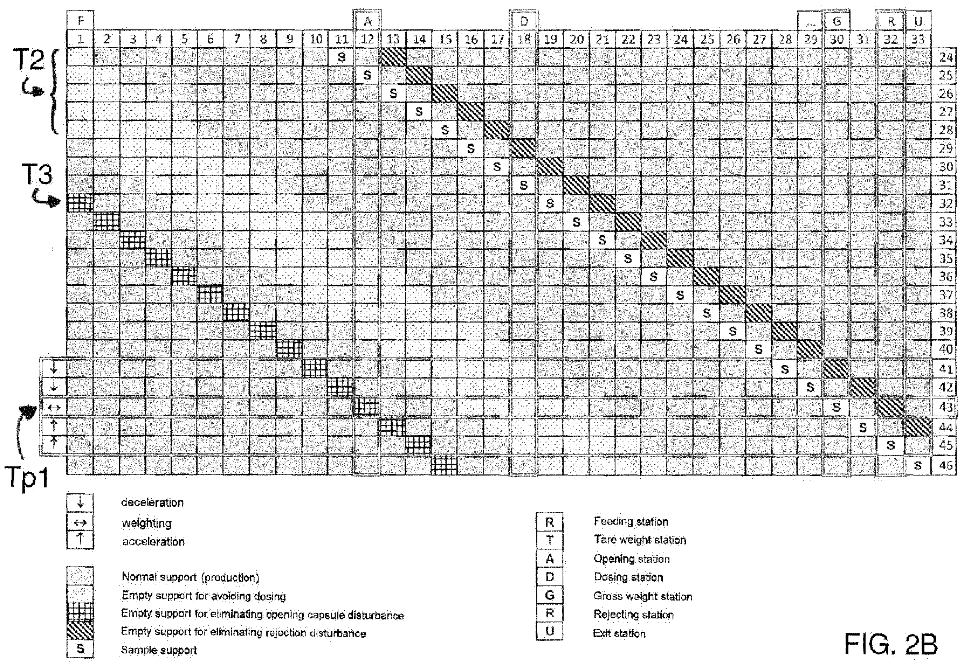

Figures 2a, 2b illustrate the two parts of a diagram showing the operation of the filling machine 1 illustrated in figure 1 which operates according to the weighing method of the invention.

In particular, the diagram shows the operation of the filling machine in the preferred embodiment in which all the three operating stations A, D, R are inhibited.

In the diagram, each box represents a support 8 of the moving turret 7 that moves in time (ordinate axis) and space (abscissa axis) through the different operating stations and the weighing means of the filling machine.

The grey boxes represent the supports 8 housing containers 100 in the normal operation, the boxes marked with a S represent the supports 8 housing the sample S of containers 100 to be weighed in the weighing time interval Tp1, the boxes with different backgrounds represent the empty supports, i.e. without containers, which will be positioned at the operating stations A, D, R in the weighing time interval Tp1.

More precisely, the diagram shows in the abscissa axis the advancement steps composing a packaging path of the filling machine and the relative position of the feeding station F, the first weighing means G, the opening operating station A, the dosing operating station D, the rejecting operating station R, the exit station U.

On the ordinate axis, the diagram shows the operation time of the filling machine 1, i.e. successive operating steps, and a sequence of supports 8 of the moving means-7 that are moved through the various stations of the filling machine.

For description clarity and graphical representation simplicity, the filling machine 1 of figure 1 does not reproduce exactly the same arrangement of the advancement steps between the various operating stations shown in the diagram.

With reference to the operating steps of the method above described and the diagram of figures 2a, 2b, a succession of inhibition time intervals T1, T2, T3 is provided, in which one or more respective supports 8 are not supplied in the feeding station F with 100 containers and therefore are empty.

In a first inhibition time interval T1 the support, which will be positioned at the rejecting operating station R, the operation of which is inhibited during the first weighing interval Tp1 (column 32, line 43), in particular when the sample S of containers 100 is weighed on the first weighing means G (column 30, line 43), is not supplied at the feeding station F (column 1, line 12).

In a second inhibition time interval T2 the support, which will be positioned at the dosing operating station D, the operation of which is inhibited during the first weighing interval Tp1 (column 18, line 43), is not supplied at the feeding station F (column 1, line 26).

In a third inhibition time interval T3 the support of the moving means 7, which will be positioned at the opening operating station A, the operation of which is inhibited during the first weighing interval Tp1 (column T, line 43), is not supplied at the feeding station F (column 1, line 32).

To be noted that before the first weighing interval Tp1, the speed of the filling machine 1 is decelerated from the nominal speed to the established reduced speed for two respective advancement steps (lines 41 and 42) and after the first weighing interval Tp1 the speed is accelerated from the reduced speed up to the nominal speed for two respective advancement steps (lines 44 and 45). Therefore, a time interval is defined which contains the first weighing time interval Tp1 in which the speed of the filling machine 1 is not the nominal one. In such time interval, in the dosing station D five supports 8 of the moving means 7 follow each other, which do not need to be supplied in the feeding station F in the second inhibition time T2. In fact, if the dosing of the containers has to be inhibited during the first weighing time Tp1 so that the weighing of the sample S is not perturbed and disturbed by the operation of the pneumatic and mechanical operating means of the dosing station D, during the advancement steps of the machine that do not occur at the nominal speed, the dosing has to be inhibited in order not to have containers 100 with a different dosing from those filled at a nominal speed. In fact, it has been discovered (in particular in the case of powdery products and dip type dispensers) that changes in the operation speed lead to changes in the doses obtained and dispensed into the containers.

Therefore, thanks to the weighing method of the invention it is possible in a filling machine, which typically weights all the containers so carrying out a total or so-called 100% weight control, to accomplish in established checking periods a statistical control with a higher accuracy and precision on a sample S of containers 100. Such procedure is made possible during a weighing time interval Tp1 by suitably slowing down the speed of the filling machine in or-der to have a longer time available for weighing and stopping the operation of the operating stations A, D, R in this manner eliminating or considerably reducing the disturbances and perturbations due to both vibrations, accelerations, stresses generated by mechanisms and moving parts and to air flows, streams and/or air turbulences generated by the operating means of the operating stations A, D, R.

It should be pointed out that, depending on the geometry of the machine, the mutual arrangement and the operation of the operating stations, i.e. in short on the entity of the disturbances generated by the operating stations and the influence of such disturbances on the weighing operations, not all the operating stations A, D, R must necessarily be inhibited when the sample S is weighed and, consequently, it can be avoided stopping the supply of empty capsules to the supports 8 of the moving means 7 that will be positioned at that operating stations which do not disturb the weighing operation, to the advantage of the productivity of the machine.

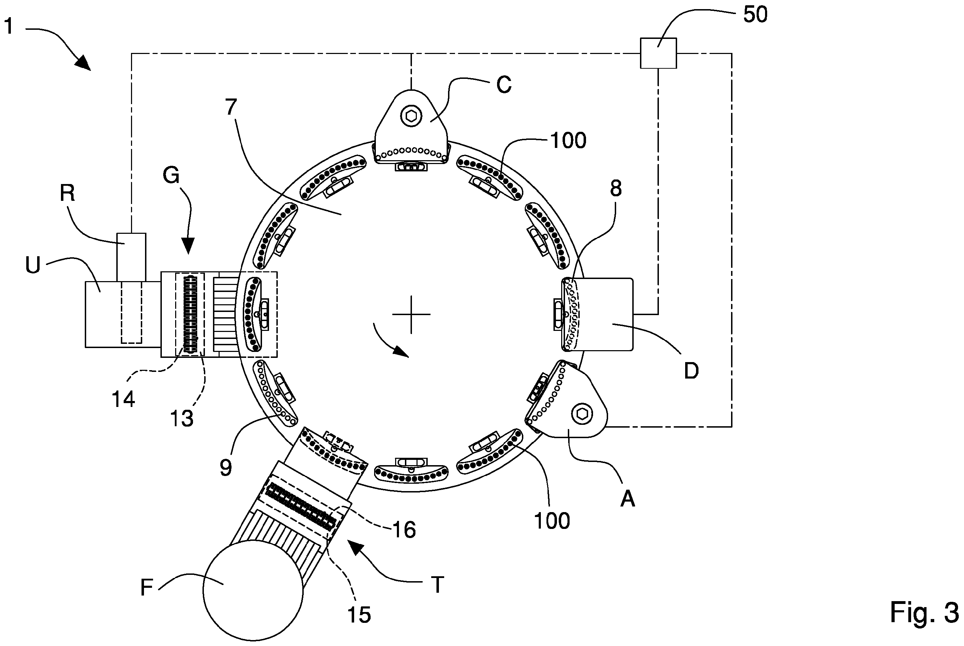

With reference to figure 3, a variant of the filling machine 1 is illustrated, which differs from that previously described in that the weighing means comprise, in addition to the first weighing means G arranged for weighing the product-filled containers 100 after the dosing (gross weight control), second weighing means T arranged for weighing the empty containers 100 before the dosing (tare control).

The second weighing means T are inserted downstream of the feeding station F so as to weigh all the empty containers 100 before they are inserted in the moving turret 7. The second weighing means T comprise a second electronic scale 15 provided with a plurality of corresponding measuring cells 16 (load cells) capable of measuring the weight of all the empty containers 100 intended to be housed in a support 8 of the moving means 7. Alternatively, the second weighing means T can comprise weighing systems of a direct or indirect type, for example of a capacitive, microwave type, with LVDT, etc.

The control and processing unit 50 controls and coordinates the operation of the feeding station F, the operating stations A, D, C, R, the first weighing means G and the second weighing means T.

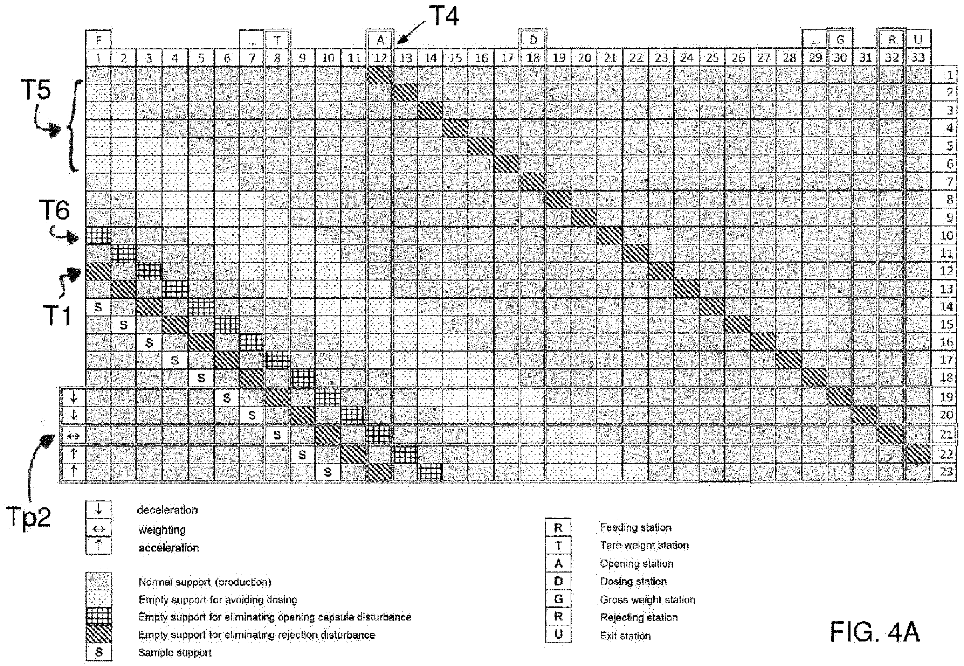

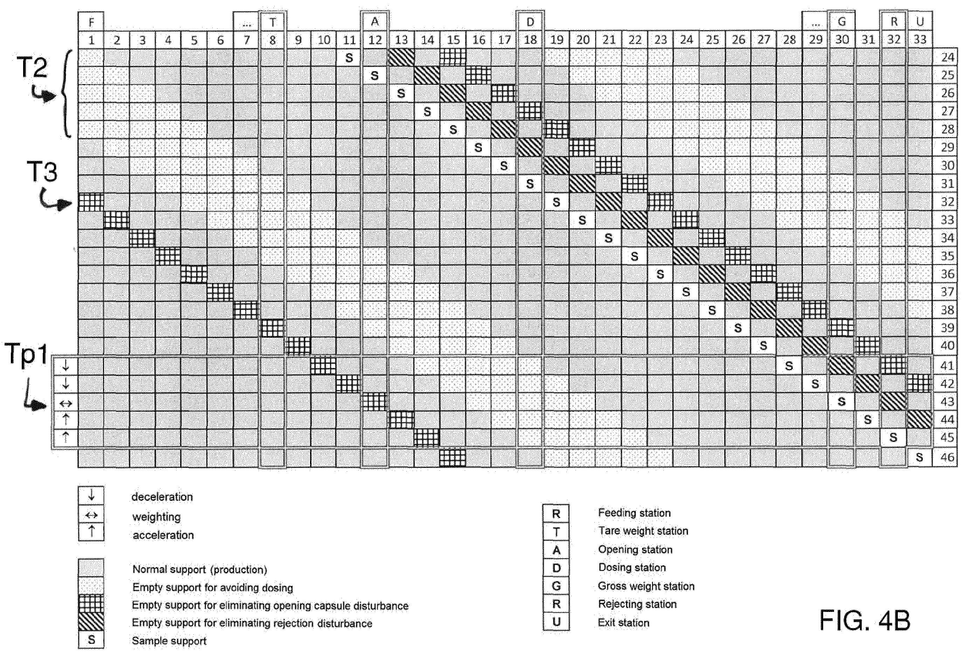

A variant of the weighing method of the invention illustrated in the diagram of figures 4a and 4b is thus provided that differs from the method above described and illustrated in the diagram of figures 2a, 2b in that it provides to stop in further defined inhibition time intervals T4, T5, T6 of the checking period the supply of the containers 100 in the feeding station F so as to leave empty established supports 8 of the moving means 7 intended to be positioned in the operating stations A, D, R in a further, or second, weighing time interval Tp2 of the checking period, in which the sample S of empty containers 100 coming from the feeding station F is weighed on the second weighing means T before it is inserted in the moving means 7.

Also during the further weighing time interval Tp2, there is provided to decrease the nominal operation speed of the filling machine 1 so as to increase the weighing time for weighing with a higher accuracy and precision the sample S of empty containers 100 in the second weighing means T. There is further provided to inhibit in the further weighing time interval Tp2 the operation of the operating stations A, D, R in order not to perturb the weighing with vibrations and/or accelerations and/or air flows and/or air turbulences generated in the operation by the operating means of the operating stations A, D, R.

Before the further weighing time interval Tp2, there is also provided to decelerate for at least one advancement step, for example two, the nominal speed of the machine up to a preset reduced speed, for example equal to 50% of the nominal speed, and after said further weighing time interval there is provided to accelerate for at least one advancement step, for example two, the reduced speed up to the nominal speed. In the further weighing time interval Tp2 there is provided to keep the reduced speed constant for at least one advancement step.

Figures 4a, 4b illustrate the two parts of a diagram illustrating the operation of the filling machine 1 of figure 3 which operates according to the variant of the weighing method of the invention above described carried out by the filling machine 1 illustrated in Figure 3.

In particular, it shall be noticed that, in addition to the first three inhibition time intervals T1, T2, T3 above described and during which the supports 8 of the moving means 7, which will be positioned respectively at the rejecting station R, at the dosing station D, at the opening station A, the operation of which is inhibited during the weighing interval Tp1 (when the product-filled sample S of containers 100 is weighed on the first weighing means G), are not supplied, further inhibition time intervals T4, T5, T6 are provided during which the supports 8 of the moving means 7, which will be positioned respectively at the rejecting station S, at the dosing station D, at the opening station A, the operation of which is inhibited during the further weighing interval Tp2 (when the sample S of empty containers 100 is weighed on the second weighing means T), are not supplied.

More precisely, in a fourth inhibition time interval T4 the support, which will be positioned in the rejecting station S, the operation of which is inhibited during the further weighing interval Tp2 (column 32, line 21), in particular when the sample S of empty containers 100 is weighed on the second weighing means T (column 8, line 21), is not supplied at the feeding station F (not within the diagram).

In a fifth inhibition time interval T5 at least the support which will be positioned at the dosing station D the operation of which is inhibited during the further weighing interval Tp2 (column 18, line 21) is not supplied at the feeding station F (column 1, line 4),.

In a sixth inhibition time interval T6 the support of the moving means 7, which will be positioned at the opening station A, the operation of which is inhibited during the further weighing interval Tp2 (column 12, line 21), is not supplied at the feeding station F (column 1, line 10).

In this case also, before the further weighing interval Tp2, the speed of the filling machine 1 is decelerated from the nominal speed to the preset reduced speed for two corresponding advancement steps (lines 19 and 20) and, after the further weighing interval Tp2, the speed is accelerated from the reduced speed up to the nominal speed for two corresponding advancement steps (lines 22 and 23). Therefore, a corresponding time interval is defined, containing the further weighing time interval Tp2 and in which the speed of the filling machine 1 is not the nominal one. In such time interval in the dosing station D five supports 8 of the moving means 7 follow each other, which do not need to be supplied in the feeding station F (fifth inhibition time interval T5). In fact, if the dosing of the containers 100 has to be inhibited during the further weighing time interval Tp2 so that the weighing is not perturbed and disturbed by the operation of the pneumatic and mechanical operating means of the dosing station D, during the advancement steps of the filling machine 1 that do not occur at the nominal speed the dosing has to be inhibited in order not to have containers 100 with a different dosing from those filled at a nominal speed.

Therefore, the above described variant of the weighing method of the invention allows, in a filling machine 1 which normally weight all the containers, thus carrying out a total weight control, to accomplish in established checking period a statistical control with a higher accuracy and precision on a sample S of containers 100, before and after the dosing.

Such procedure is made possible during a weighing time interval Tp1 and a further weighing time interval Tp2 by suitably slowing down the speed of the filling machine in order to have a longer time available for the weighing and stopping the operation of the operating stations A, D, R in this manner eliminating or considerably reducing the disturbances and perturbations due to both vibrations, accelerations, stresses generated by mechanisms and moving parts of the operating stations and to air flows, streams and/or air turbulences generated by the operating means of the operating stations.

The method provides to weigh the containers 100 upstream of the dosing station D, for measuring the weight of the empty containers 100 (tare), and downstream of the dosing station D, for measuring the weight of the product filled containers 100 (gross weight), thus calculating the difference of the measured weights to obtain the net weight of the dispensed product. Therefore, such method is particularly advantageous in the case of micro-dosing, in which the amount of product to be dosed in the containers 100 is very small and tolerance range required on the product dosing is particularly narrow.

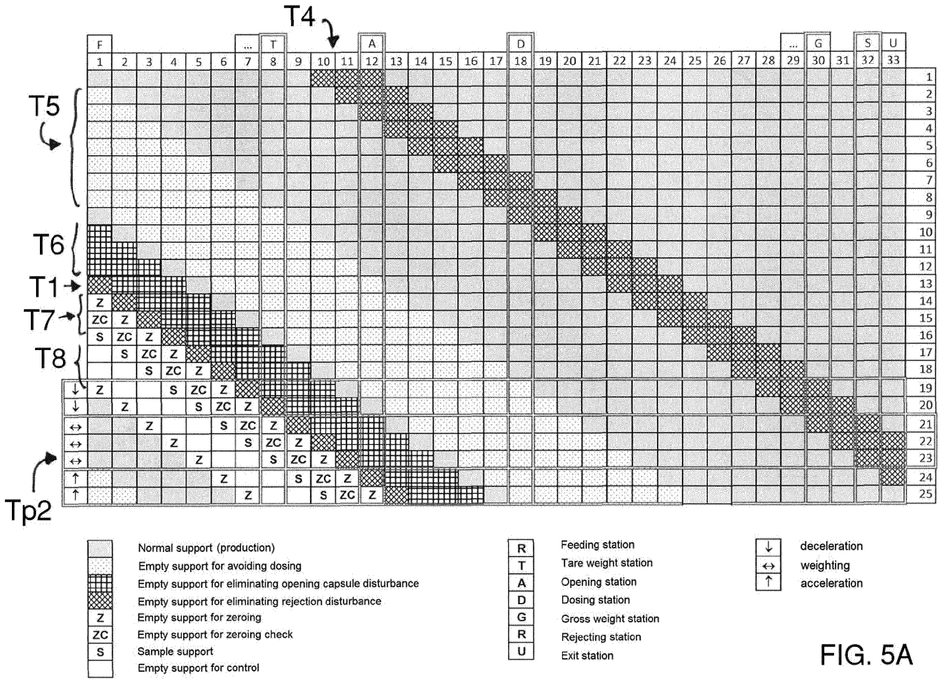

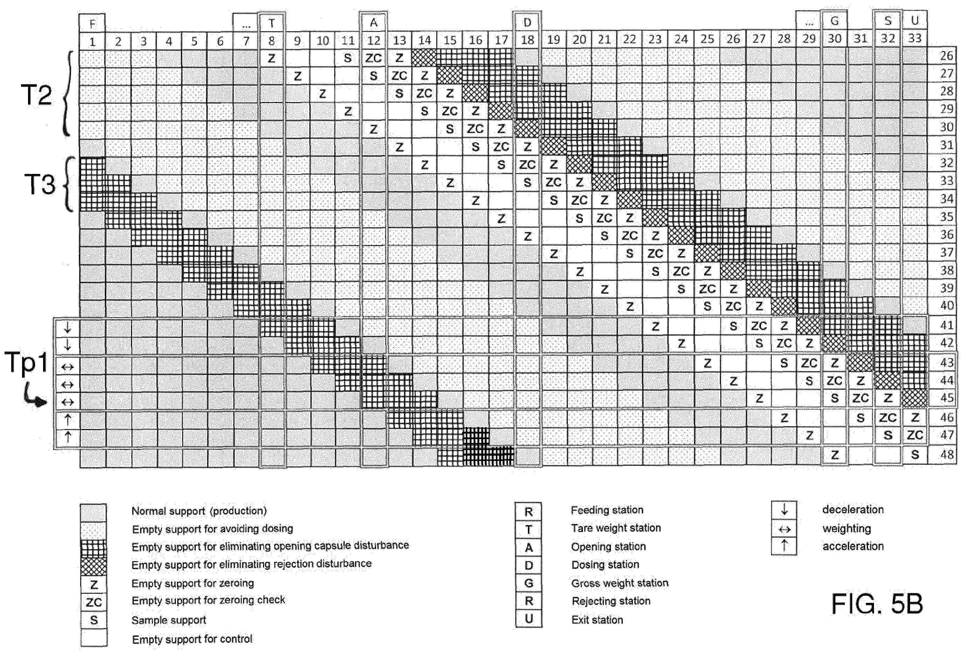

With reference to figures 5A, 5B a further variant of the weighing method of the invention is provided, which differs from the method above described in that it provides, during the weighing time intervals Tp1, Tp2, to keep the reduced speed of the filling machine constant for at least two advancement steps, particularly for three advancement steps, so as to allow the weighing means G, T carrying out empty state control weighing operation, in particular for carrying out a zeroing procedure and a zeroing check procedure.

Such procedures, of a known type and not described in detail, are necessary for ensuring the maximum precision in weighing in the case of electronic scales 13, 15 provided with load cells 14, 16.

To such object, as illustrated in the diagram of figure 5A, 5B, a zeroing time interval T7 of the checking period is provided, in which the supports 8 of the moving means 7 intended to be positioned in the first weighing means G and in the second weighing means T are not supplied with the containers 100, in particular to allow carrying out the zeroing and zeroing check procedures of the above mentioned weighing means G, T. The boxes marked with a Z and ZC represent the empty supports which allow the weighing means G, T carrying out the zeroing procedure and the zeroing check procedure, respectively.

A further zeroing time interval T8 of the checking period is also provided, in which the supports 8 of the moving means 7, which are intended to be positioned at the first weighing means G immediately after the weighing time interval Tp1 and at the second weighing means T immediately after the further weighing interval Tp2, are not supplied with the containers 100, in particular to allow carrying out the zeroing and control procedures of the weighing means G, T for the operation at a nominal speed. The boxes that are white and marked by the letter Z represent the empty supports that allow the weighing means carrying out the above mentioned control and zeroing procedures, respectively.

It shall be noticed that, in this case, in each of the inhibition time intervals T1, T2, T3, T4, T5, T6 a plurality of supports, particularly three, are not supplied in order to allow the inhibition and stop of the opening A, metering D, and rejecting R operating stations when the sample S of containers 100 is weighed (in the weighing time intervals Tp1, Tp2) and when empty state measurements (respective supports without containers 100 - boxes Z, ZC) are carried out for the zeroing and zeroing check operations.

To be noted that, before the weighing intervals Tp1, Tp2, the speed of the filling machine 1 is decelerated from the nominal speed to the established reduced speed for two corresponding advancement steps (lines 19, 20 and 41, 42) and after the weighing intervals Tp1, Tp2 the speed is accelerated from the reduced speed up to the nominal speed for two corresponding advancement steps (lines 24, 25 and 46, 47). The reduced speed is kept for three advancement steps (21-23 and 43-45) in order to allow weighing the sample 100 of containers and for carrying out the zeroing and zeroing check procedures.

Respective time intervals containing the weighing time intervals Tp1, Tp2 and in which the speed of the filling machine 1 is not the nominal one are thus established. In such time interval, in the dosing station D seven supports 8 of the moving means follow each other, which do not need to be supplied in the feeding station F (second inhibition time T2, fifth inhibition time T5). In fact, if the dosing of the containers has to be inhibited during the weighing time intervals Tp1, Tp2 so that the weighing operation is not perturbed and disturbed by the operation of the pneumatic and mechanical operating means of the dosing station D, during the advancement steps of the machine that do not occur at the nominal speed the dosing has to be inhibited in order not to have containers 100 with a different dosing from those filled at a nominal speed.

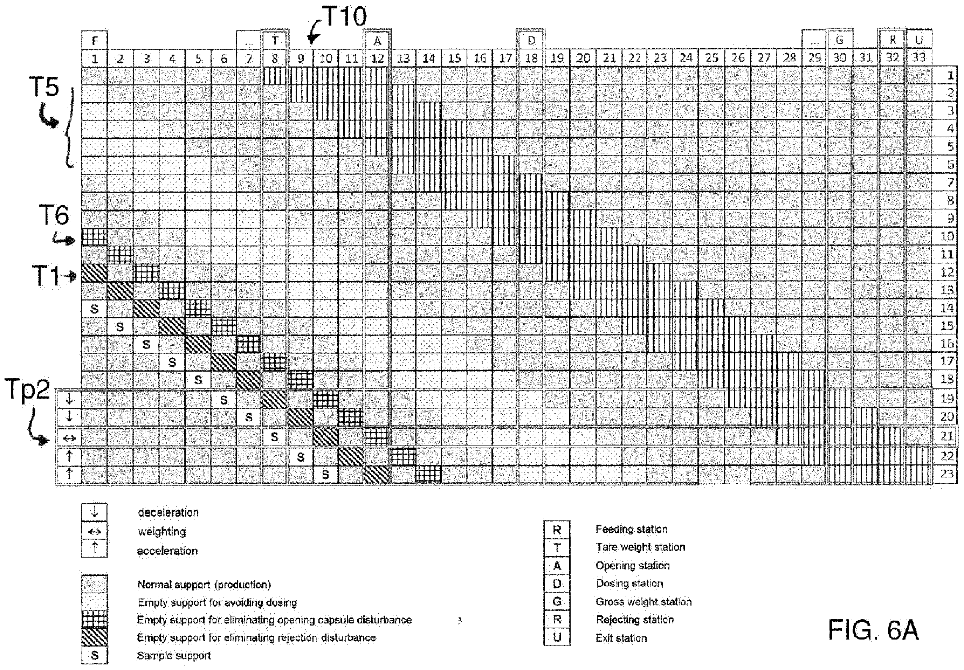

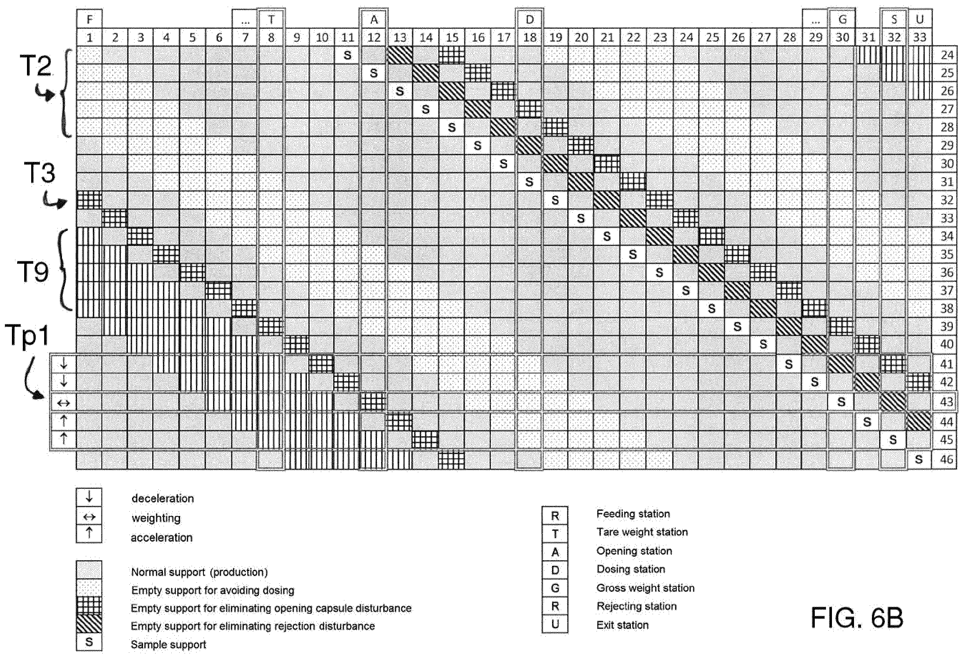

Figures 6a, 6b illustrate another further variant of the weighing method of the invention which differs from the method above described and illustrated in the figures 4A, 4B in that it provides to stop in a stop time interval T9 of the checking period the supply with the containers 100 so as to leave empty respective established supports 8 of the moving means 7 intended to be positioned at the second weighing means T during the weighing time interval Tp1 in which the sample of product filled containers 100, taken from a respective established support of the moving means 7, is weighed on the first weighing means G.

Similarly, there is provided to stop the supply with the containers 100 in a further stop time interval T10 of the checking period so as to leave empty respective established supports 8 of the moving means 7 intended to be positioned at the first weighing means G during the further weighing time interval Tp2 during which the sample of empty containers 100 coming from the feeding station F is weighed on the second weighing means T.

In this manner it is avoided that containers 100 can be weighed on the first weighing means G or on the second weighing means T while the sample S of containers 100 is weighed, i.e. at a reduced operation speed of the machine. If the above mentioned containers 100 were at the first weighing means G (gross), they would be weighed before on the second weighing means T (tare) at the nominal operation speed of the filling machine; vice versa, if they are at the second weighing means T (tare), the above mentioned containers 100 should be weighed subsequently on the first weighing means G (gross) at the nominal operation speed of the filling machine.

It is thus prevented that containers 100 can be weighed before and after the dosing at different operation speeds of the filling machine, these speed changes determining, for the same weighed containers, measurement differences, for example due to the different transfer speed of the container to the load cell, which measurement differences could not be acceptable for the required tolerances and which would require a rejection of the weighed containers.

## Claims

1. Method for weighing containers (100), in particular capsules, in a filling machine (1) suitable to fill said containers (100) with at least one product and comprising a feeding station (F) of said containers (100), a plurality of operating stations (A, D, R) for carrying out operations on said containers (100), weighing means (G, T) for weighing said containers (100) and moving means (7) provided with a plurality of supports (8) with respective seats (9) for housing and moving said containers (100) sequentially through said operating stations (A, D, R), said method comprising supplying said supports (8) with said containers (100) in said feeding station (F), carrying out operations on said containers (100) by means of said operating stations (A, D, R), and weighing said containers (100) by means of said weighing means (G, T) with a defined precision and accuracy, comprising:
- selecting during the operation of said filling machine (1) a checking period;
- stopping in defined inhibition time intervals (T1, T2, T3) of said checking period said supplying with said containers (100) so as to leave empty established supports (8) of the moving means (7) intended to be positioned in at least one of said operating stations (A, D, R) in a weighing time interval (Tp1) of said checking period during which a sample (S) of containers (100) taken from at least one further established support (8) of the moving means (7) is weighed on said weighing means (G, T);
- decreasing during said weighing time interval (Tp1) a nominal operation speed of said filling machine (1) in order to increase a weighing time so as to weigh with an increased accuracy and precision said sample (S) of containers (100) in said weighing means (G, T);
- inhibiting in said weighing time interval (Tp1) the operation of said at least one of said operating stations (A, D, R) in order not to perturb said weighing with vibrations and/or accelerations and/or air flows and/or air turbulences generated in the operation by said at least one of said operating stations (A, D, R); and
- weighing said sample (S) of containers (100) filled with said product, in particular by first weighing means (G) of said weighing means, in said weighing time interval (Tp1).

2. Method according to claim 1, wherein said stopping comprises stopping in further defined inhibition time intervals (T4, T5, T6) of said checking period said supplying with said containers (100) so as to leave empty respective established supports (8) of the moving means (7) intended to be positioned in the operating stations (A, D, R) in a further weighing time interval (Tp2) of said checking period, during which said sample of empty containers (100) is weighed on second weighing means (T) of said weighing means.

3. Method according to any preceding claim, wherein said filling machine (1) operates with intermittent motion and advancement steps, said intermittent motion comprising a motion step and a stop step sequentially repeated, said weighing time being comprised in a stop step.

4. Method according to claim 3, wherein before said weighing time interval (Tp1, Tp2), there is provided to decelerate for at least one advancement step said nominal operation speed to a reduced operation speed and wherein after said weighing time interval (Tp1, Tp2) there is provided to accelerate for at least one advancement step said reduced operation speed up to said nominal operation speed, in said weighing time interval (Tp1, Tp2) said reduced operation speed being maintained constant for at least one advancement step.

5. Method according to claim 4, wherein in said weighing time interval (Tp1, Tp2) there is provided to maintain constant said reduced operation speed for at least two advancement steps, in particular for three advancement steps, to allow said weighing means (G, T) carrying out empty state control weighing operations, in particularly for carrying out a zeroing procedure.

6. Method according to claim 5, wherein said stopping comprises stopping in a zeroing interval (T7) of said checking period said supplying with said containers (100) so as to leave empty respective established supports (8) of the moving means (7) intended to be positioned at said weighing means (G, T) during said empty state control weighing operations.

7. Method according to claim 6, wherein said stopping comprises stopping in a further zeroing interval (T8) of said checking period said supplying with said containers (100) so as to leave empty respective established supports (8) of the moving means (7) intended to be positioned after said weighing time interval (Tp1, Tp2) at said weighing means (G, T) to allow the latter ones carrying out zeroing and checking procedures before the operation of the filling machine at nominal operation speed.

8. Method according to claim 2, wherein said stopping comprises stopping in a stop time interval (T9) of said checking period said supplying with said containers (100) so as to leave empty respective established supports (8) of the moving means (7) intended to be positioned at the second weighing means (T) during said weighing time interval (Tp1) in which said sample (S) of containers (100) filled with product is weighed on said first weighing means (G).

9. Method according to any of claims 2 to 8, wherein said stopping comprises stopping in a further stop time interval (T10) of said checking period said supplying with said containers (100) so as to leave empty respective established supports (8) of the moving means (7) intended to be positioned at the first weighing means (G) during said further weighing time interval (Tp2) in which said sample (S) of empty containers (100) is weighed on said second weighing means (T).

10. Method according to any preceding claim, wherein said operating stations include at least one opening station (A) for opening said containers (100), one dosing station (D) for making product doses and for dosing said product doses in respective containers (100), one rejecting station (S) for eliminating and rejecting faulty containers (100).

11. Machine for weighing and filling containers (100) with at least one product comprising a feeding station (F) of said containers (100), a plurality of operating stations (A, D, R) for carrying out operations on said containers (100), weighing means (G, T) for weighing said containers (100) and moving means (7) provided with a plurality of supports (8) with corresponding seats (9) for housing and moving said containers (100) sequentially through said operating stations (A, D, R), said machine comprising a processing and control unit (50) arranged for carrying out a method according to any of claims 1 to 10.

## Patentansprüche

1. Verfahren zum Wiegen von Behältern (100), insbesondere Kapseln, in einer Füllmaschine (1), die geeignet ist, um die Behälter (100) mit mindestens einem Produkt zu füllen, und mit einer Zuführungsstation (F) der Behälter (100), einer Vielzahl von Betriebsstationen (A, D, R) zum Ausführen von Operationen an den Behältern (100), Wiegeeinrichtungen (G, T) zum Wiegen der Behälter (100) und einer Bewegungseinrichtung (7), die mit einer Vielzahl von Stützen (8) mit jeweiligen Sitzen (9) zum Aufnehmen und Bewegen der Behälter (100) sequentiell durch die Betriebsstationen (A, D, R) versehen ist, wobei das Verfahren das Beliefern der Stützen (8) mit den Behältern (100) in der Zuführungsstation (F), das Ausführen von Operationen an den Behältern (100) mittels der Betriebsstationen (A, D, R) und das Wiegen der Behälter (100) mittels der Wiegeeinrichtungen (G, T) mit einer definierten Präzision und Genauigkeit umfasst, das umfasst:
- Auswählen einer Prüfungsperiode während des Betriebs der Füllmaschine (1);
- Stoppen der Belieferung mit den Behältern (100) in definierten Sperrzeitintervallen (T1, T2, T3) der Prüfungsperiode, um festgelegte Stützen (8) der Bewegungseinrichtung (7) leer zu lassen, die in mindestens einer der Betriebsstationen (A, D, R) in einem Wiegezeitintervall (Tp1) der Prüfungsperiode positioniert werden sollen, während dessen eine Probe (S) von Behältern (100), die von mindestens einer weiteren festgelegten Stütze (8) der Bewegungseinrichtung (7) genommen wird, auf den Wiegeeinrichtungen (G, T) gewogen wird;
- Verringern einer nominalen Betriebsgeschwindigkeit der Füllmaschine (1) während des Wiegezeitintervalls (Tp1), um eine Wiegezeit zu verlängern, um die Probe (S) von Behältern (100) in den Wiegeeinrichtungen (G, T) mit einer erhöhten Genauigkeit und Präzision zu wiegen;
- Sperren des Betriebs der mindestens einen der Betriebsstationen (A, D, R) in dem Wiegezeitintervall (Tp1), um das Wiegen nicht mit Vibrationen und/oder Beschleunigungen und/oder Luftströmungen und/oder Luftturbulenzen zu stören, die im Betrieb durch die mindestens eine der Betriebsstationen (A, D, R) erzeugt werden; und
- Wiegen der Probe (S) von Behältern (100), die mit dem Produkt gefüllt sind, insbesondere durch eine erste Wiegeeinrichtung (G) der Wiegeeinrichtungen in dem Wiegezeitintervall (Tp1).

2. Verfahren nach Anspruch 1, wobei das Stoppen das Stoppen der Belieferung mit den Behältern (100) in weiteren definierten Sperrzeitintervallen (T4, T5, T6) der Prüfungsperiode umfasst, um jeweilige festgelegte Stützen (8) der Bewegungseinrichtung (7) leer zu lassen, die in den Betriebsstationen (A, D, R) in einem weiteren Wiegezeitintervall (Tp2) der Prüfungsperiode positioniert werden sollen, während dessen die Probe von leeren Behältern (100) auf der zweiten Wiegeeinrichtung (T) der Wiegeeinrichtungen gewogen wird.

3. Verfahren nach einem vorangehenden Anspruch, wobei die Füllmaschine (1) mit einer intermittierenden Bewegung und Vorwärtsbewegungsschritten arbeitet, wobei die intermittierende Bewegung einen Bewegungsschritt und einen Stoppschritt umfasst, die sequentiell wiederholt werden, wobei die Wiegezeit in einem Stoppschritt enthalten ist.

4. Verfahren nach Anspruch 3, wobei vor dem Wiegezeitintervall (Tp1, Tp2) vorgesehen ist, für mindestens einen Vorwärtsbewegungsschritt die nominale Betriebsgeschwindigkeit auf eine verringerte Betriebsgeschwindigkeit zu verlangsamen, und wobei nach dem Wiegezeitintervall (Tp1, Tp2) vorgesehen ist, für mindestens einen Vorwärtsbewegungsschritt die verringerte Betriebsgeschwindigkeit bis auf die nominale Betriebsgeschwindigkeit zu beschleunigen, wobei in dem Wiegezeitintervall (Tp1, Tp2) die verringerte Betriebsgeschwindigkeit für mindestens einen Vorwärtsbewegungsschritt konstant gehalten wird.

5. Verfahren nach Anspruch 4, wobei in dem Wiegezeitintervall (Tp1, Tp2) vorgesehen ist, die verringerte Betriebsgeschwindigkeit für mindestens zwei Vorwärtsbewegungsschritte, insbesondere für drei Vorwärtsbewegungsschritte, konstant zu halten, um zu ermöglichen, dass die Wiegeeinrichtungen (G, T) Kontrollwiegeoperationen im leeren Zustand ausführen, insbesondere zum Ausführen einer Nullstellprozedur.

6. Verfahren nach Anspruch 5, wobei das Stoppen das Stoppen der Belieferung mit den Behältern (100) in einem Nullstellintervall (T7) der Prüfungsperiode umfasst, um jeweilige festgelegte Stützen (8) der Bewegungseinrichtung (7) leer zu lassen, die an den Wiegeeinrichtungen (G, T) während der Kontrollwiegeoperationen im leeren Zustand positioniert werden sollen.

7. Verfahren nach Anspruch 6, wobei das Stoppen das Stoppen der Belieferung mit den Behältern (100) in einem weiteren Nullstellintervall (T8) der Prüfungsperiode umfasst, um jeweilige festgelegte Stützen (8) der Bewegungseinrichtung (7) leer zu lassen, die nach dem Wiegezeitintervall (Tp1, Tp2) an den Wiegeeinrichtungen (G, T) positioniert werden sollen, um zu ermöglichen, dass die letzteren Nullstell- und Prüfungsprozeduren vor dem Betrieb der Füllmaschine mit der nominalen Betriebsgeschwindigkeit ausführen.

8. Verfahren nach Anspruch 2, wobei das Stoppen das Stoppen der Belieferung mit den Behältern (100) in einem Stoppzeitintervall (T9) der Prüfungsperiode umfasst, um jeweilige festgelegte Stützen (8) der Bewegungseinrichtung (7) leer zu lassen, die an der zweiten Wiegeeinrichtung (T) während des Wiegezeitintervalls (Tp1) positioniert werden sollen, in dem die Probe (S) von Behältern (100), die mit Produkt gefüllt sind, auf der ersten Wiegeeinrichtung (G) gewogen werden.

9. Verfahren nach einem der Ansprüche 2 bis 8, wobei das Stoppen das Stoppen der Belieferung mit den Behältern (100) in einem weiteren Stoppzeitintervall (T10) der Prüfungsperiode umfasst, um jeweilige festgelegte Stützen (8) der Bewegungseinrichtung (7) leer zu lassen, die an der ersten Wiegeeinrichtung (G) während des weiteren Wiegezeitintervalls (Tp2) positioniert werden sollen, in dem die Probe (S) von leeren Behältern (100) auf der zweiten Wiegeeinrichtung (T) gewogen wird.

10. Verfahren nach einem vorangehenden Anspruch, wobei die Betriebsstationen mindestens eine Öffnungsstation (A) zum Öffnen der Behälter (100), eine Dosierstation (D) zum Herstellen von Produktdosen und zum Dosieren der Produktdosen in jeweilige Behälter (100), eine Ausmusterungsstation (S) zum Beseitigen und Ausmustern von fehlerhaften Behältern (100) umfassen.

11. Maschine zum Wiegen und Füllen von Behältern (100) mit mindestens einem Produkt mit einer Zuführungsstation (F) der Behälter (100), einer Vielzahl von Betriebsstationen (A, D, R) zum Ausführen von Operationen an den Behältern (100), Wiegeeinrichtungen (G, T) zum Wiegen der Behälter (100) und einer Bewegungseinrichtung (7), die mit einer Vielzahl von Stützen (8) mit entsprechenden Sitzen (9) zum Aufnehmen und Bewegen der Behälter (100) sequentiell durch die Betriebsstationen (A, D, R) versehen ist, wobei die Maschine eine Verarbeitungs- und Steuereinheit (50) umfasst, die zum Ausführen eines Verfahrens nach einem der Ansprüche 1 bis 10 angeordnet ist.

## Revendications

1. Procédé pour peser des contenants (100), en particulier des capsules, dans une machine de remplissage (1) appropriée pour remplir lesdits contenants (100) d'au moins un produit et comprenant un poste de remplissage (F) desdits contenants (100), une pluralité de postes d'exploitation (A, D, R) pour exécuter des opérations sur lesdits contenants (100), des moyens de pesage (G, T) pour peser lesdits contenants (100) et des moyens de déplacement (7) dotés d'une pluralité de supports (8) avec des sièges respectifs (9) pour loger et déplacer lesdits contenants (100) séquentiellement à travers lesdits postes d'exploitation (A, D, R), ledit procédé comprenant la fourniture desdits supports (8) avec lesdits contenants (100) dans ledit poste d'alimentation (F), l'exécution d'opérations sur lesdits contenants (100) au moyen desdits postes d'exploitation (A, D, R), et le pesage desdits contenants (100) au moyen desdits moyens de pesage (G, T) avec une précision et une exactitude définies, comprenant :
- la sélection, pendant le fonctionnement de ladite machine de remplissage (1), d'une période de vérification ;
- l'arrêt, à des intervalles de temps d'inhibition définis (T1, T2, T3) de ladite période de vérification, de ladite fourniture desdits contenants (100) de sorte à laisser vides des supports déterminés (8) des moyens de déplacement (7) destinés à être positionnés dans au moins un desdits postes d'exploitation (A, D, R) dans un intervalle de temps de pesage (Tp1) de ladite période de vérification pendant lequel un échantillon (S) de contenants (100) prélevé sur au moins un autre support déterminé (8) des moyens de déplacement (7) est pesé sur lesdits moyens de pesage (G, T) ;
- la réduction pendant ledit intervalle de temps de pesage (Tp1) d'une vitesse de fonctionnement nominale de ladite machine de remplissage (1) afin d'accroître un temps de pesage de sorte à peser avec une exactitude et une précision accrues ledit échantillon (S) de contenants (100) dans lesdits moyens de pesage (G, T) ;
- l'inhibition pendant ledit intervalle de temps de pesage (Tp1) du fonctionnement dudit au moins un desdits postes d'exploitation (A, D, R) de sorte à ne pas perturber ledit pesage avec des vibrations et/ou des accélérations et/ou des flux d'air et/ou des turbulences d'air générés lors du fonctionnement par ledit au moins un desdits postes d'exploitation (A, D, R) ; et
- le pesage dudit échantillon (S) de contenants (100) remplis dudit produit, en particulier par de premiers moyens de pesage (G) desdits moyens de pesage, dans ledit intervalle de temps de pesage (Tp1).

2. Procédé selon la revendication 1, dans lequel ledit arrêt comprend l'arrêt, à des intervalles de temps d'inhibition définis supplémentaires (T4, T5, T6) de ladite période de vérification, de ladite fourniture desdits contenants (100), de sorte à laisser vides des supports déterminés (8) des moyens de déplacement (7) destinés à être positionnés dans les postes d'exploitation (A, D, R) dans un intervalle de temps de pesage supplémentaire (Tp2) de ladite période de vérification pendant lequel ledit échantillon de contenants vides (100) est pesé sur de seconds moyens de pesage (T) desdits moyens de pesage (G, T).

3. Procédé selon l'une quelconque des revendications précédentes, dans lequel ladite machine de remplissage (1) fonctionne avec un mouvement intermittent et des étapes d'avancement, ledit mouvement intermittent comprenant une étape de mouvement et une étape d'arrêt répétées séquentiellement, ledit temps de pesage étant compris dans une étape d'arrêt.

4. Procédé selon la revendication 3, dans lequel avant ledit intervalle de temps de pesage (Tp1, Tp2), il est prévu de décélérer pendant au moins une étape d'avancement ladite vitesse de fonctionnement nominale en une vitesse de fonctionnement réduite et dans lequel, après ledit intervalle de temps de pesage (Tp1, Tp2), il est prévu d'accélérer pendant au moins une étape d'avancement ladite vitesse de fonctionnement réduite en ladite vitesse de fonctionnement nominale, dans ledit intervalle de temps de pesage (Tp1, Tp2) ladite vitesse de fonctionnement réduite étant maintenue constante pendant au moins une étape d'avancement.

5. Procédé selon la revendication 4, dans lequel dans ledit intervalle de temps de pesage (Tp1, Tp2) il est prévu de maintenir constante ladite vitesse de fonctionnement réduite pendant au moins deux étapes d'avancement, en particulier pendant trois étapes d'avancement, afin de permettre auxdits moyens de pesage (G, T) d'exécuter des opérations de pesage de contrôle à l'état vide, en particulier d'exécuter une procédure de remise à zéro.

6. Procédé selon la revendication 5, dans lequel ledit arrêt comprend l'arrêt, pendant un intervalle de temps de remise à zéro (T7) de ladite période de vérification, de ladite fourniture desdits contenants (100), de sorte à laisser vides des supports déterminés respectifs (8) des moyens de déplacement (7) destinés à être positionnés au niveau desdits moyens de pesage (G, T) au cours desdites opérations de pesage de contrôle à l'état vide.

7. Procédé selon la revendication 6, dans lequel ledit arrêt comprend l'arrêt, pendant un intervalle de temps de remise à zéro supplémentaire (T8) de ladite période de vérification, de ladite fourniture desdits contenants (100), de sorte à laisser vides des supports déterminés respectifs (8) des moyens de déplacement (7) destinés à être positionnés après ledit intervalle de temps de pesage (Tp1, Tp2) au niveau desdits moyens de pesage (G, T) afin de permettre à ces derniers d'exécuter des procédures de remise à zéro et de vérification avant le fonctionnement de la machine de remplissage à la vitesse de fonctionnement nominale.

8. Procédé selon la revendication 2, dans lequel ledit arrêt comprend l'arrêt, pendant un intervalle de temps d'arrêt (T9) de ladite période de vérification, de ladite fourniture desdits contenants (100), de sorte à laisser vides des supports déterminés respectifs (8) des moyens de déplacement (7) destinés à être positionnés au niveau des seconds moyens de pesage (T) pendant ledit intervalle de temps de pesage (Tp1) au cours duquel ledit échantillon (S) de contenants (100) remplis de produit est pesé sur lesdits premiers moyens de pesage (G).

9. Procédé selon l'une quelconque des revendications 2 à 8, dans lequel ledit arrêt comprend l'arrêt, pendant un intervalle de temps d'arrêt supplémentaire (T10) de ladite période de vérification, de ladite fourniture desdits contenants (100), de sorte à laisser vides des supports déterminés respectifs (8) des moyens de déplacement (7) destinés à être positionnés au niveau des premiers moyens de pesage (G) pendant ledit intervalle de temps de pesage supplémentaire (Tp2) au cours duquel ledit échantillon (S) de contenants vides (100) est pesé sur lesdits seconds moyens de pesage (T).

10. Procédé selon une quelconque revendication précédente, dans lequel lesdits postes d'exploitation comprennent au moins un poste d'ouverture (A) pour ouvrir lesdits contenants (100), un poste de dosage (D) pour former des doses de produit et pour doser lesdites doses de produits dans des contenants respectifs (100), un poste de rejet (S) pour éliminer et rejeter des contenants défectueux (100).

11. Machine de pesage et de remplissage de contenants (100) d'au moins un produit, comprenant un poste d'alimentation (F) desdits contenants (100), une pluralité de postes d'exploitation (A, D, R) pour exécuter des opérations sur lesdits contenants (100), des moyens de pesage (G, T) pour peser lesdits contenants (100) et des moyens de déplacement (7) dotés d'une pluralité de supports (8) avec des sièges correspondants (9) pour loger et déplacer lesdits contenants (100) séquentiellement à travers lesdits postes d'exploitation (A, D, R), ladite machine comprenant une unité de traitement et de commande (50) agencée pour exécuter un procédé selon l'une quelconque des revendications 1 à 10.
